# EUROPÄISCHE PATENTSCHRIFT

(11) **EP 1 864 836 B1**
(45) Veröffentlichungstag und Bekanntmachung des Hinweises auf die Patenterteilung: **25.06.2014**
(21) Anmeldenummer: 07005425.9
(22) Anmeldetag: 16.03.2007
(51) Int. Cl.: B60G 11/16, B60G 15/06, B60G 17/027

(54) **Vorrichtung zur Höhenverstellung des Aufbaus von Kraftfahrzeugen**
Device for height adjustment of the superstructure of motor vehicles
Dispositif destiné au réglage en hauteur du montage de véhicules automobiles

(30) Priorität: 08.06.2006 DE 102006026625
(43) Veröffentlichungstag der Anmeldung: 12.12.2007
(73) Patentinhaber: AUDI AG, 85045 Ingolstadt (DE)
(72) Erfinder: Michel, Wilfried, 93339 Riedenburg (DE)
(74) Vertreter: Asch, Konrad

(56) Entgegenhaltungen:
- EP-A1- 1 580 045
- JP-A- 10 184 763
- JP-A- 10 217 736
- JP-A- 10 217 737
- JP-A- 10 250 338
- JP-A- 62 231 810
- JP-A- 62 292 514
- JP-A- 2000 352 436
- JP-A- 2003 205 722

## Beschreibung

Die Erfindung betrifft eine Vorrichtung zur Höhenverstellung des Aufbaus von Kraftfahrzeugen gemäß dem Oberbegriff des Patentanspruches 1.

Eine derartige Vorrichtung beschreibt beispielsweise die JP 10217737 A, bei der der Aufbau von Kraftfahrzeugen mittels zweier getrennt oder gemeinsam hydraulisch betätigbarer Stellkolben in drei Stufen mit Bezug zur Fahrbahn höhenverstellbar ist. Die Druckversorgung erfolgt über zwei getrennt ansteuerbare Druckleitungen, wobei die eine Druckleitung flexibel sein muss und baulich ungünstig durch die Tragfeder zu verlegen ist.

Aus der JP 10 250 338 A ist eine gattungsgemäße Höhenverstellvorrichtung mit einem inneren Stellkolben und einem äußeren Stellkolben bekannt. Der innere Stellkolben ist aus Vollmaterial gefertigt. Der äußere Stellkolben ist becherförmig mit einem geschlossenen Boden ausgebildet, der die Druckkammer begrenzt. Durch die Höhenverstellvorrichtung ist keine Kolbenstange geführt.

Aus der weiteren JP 10 184763 A ist eine Höhenverstellvorrichtung bekannt, durch die eine Kolbenstange geführt ist. Die Druckversorgung der Stellkolben erfolgt dabei über die Kolbenstange.

Aufgabe der Erfindung ist es, eine Vorrichtung zur Höhenverstellung der gattungsgemäßen Art vorzuschlagen, die steuerungstechnisch und fertigungstechnisch günstig ist und die eine einfachere Druckversorgung der Hydraulikkammern ermöglicht. Ferner soll eine kompatible Tragfeder-Stoßdämpfer-Anbindung ohne Höhenverstellung geschaffen werden.

Die Aufgabe wird erfindungsgemäß mit den Merkmalen des Patentanspruches 1 gelöst. Vorteilhafte Weiterbildungen der Erfindung sind den jeweiligen abhängigen Ansprüchen entnehmbar.

Erfindungsgemäß wird vorgeschlagen, dass die Druckversorgung der beiden Hydraulikkammern der getrennt verstellbaren Stellkolben von einer aufbauseitigen, die erste Hydraulikkammer begrenzenden Basisplatte aus erfolgt. Durch die vorgeschlagene Druckversorgung beider Hydraulikkammern der Stellkolben über die statische Basisplatte ist keine flexible und baulich ungünstig zu verlegende Druckleitung erforderlich. Die Druckversorgung der zweiten Hydraulikkammer kann über innere Kanäle etc. der Verstelleinheit bewerkstelligt werden.

Baulich besonders vorteilhaft kann an der Basisplatte ein inneres, rohrförmiges Element, etwa ein Druckrohr, angeordnet sein, das die erste, der Basisplatte benachbarte, Hydraulikkammer durchquert und das durch den ersten Stellkolben hindurch in die zweite Hydraulikkammer mündet.

Das innere rohrförmige Element kann fertigungstechnisch günstig an der Basisplatte befestigt und in dem ersten Stellkolben geführt und abgedichtet sein. Ferner kann baulich einfach das Druckrohr bei eingefahrenem ersten und zweiten Stellkolben in eine im zweiten Stellkolben vorgesehene, zur zweiten Hydraulikkammer offene Ausnehmung einragen.

Erfindungsgemäß sind die beiden Stellkolben ringförmig ausgeführt und auf einem gemeinsamen, an der Basisplatte angeordneten Innenzylinder verschiebbar geführt. Der Innenzylinder kann dabei fertigungstechnisch günstig einen einheitlichen Durchmesser zur Führung beider Stellkolben aufweisen.

Ferner kann herstellungstechnisch günstig der erste Stellkolben in einem an der Basisplatte befestigten Außenzylinder geführt sein und es kann an den ersten Stellkolben ein zweiter, im Durchmesser kleinerer Außenzylinder angeformt sein, in dem der zweite Stellkolben verschiebbar geführt ist. An den zweiten Stellkolben kann zudem der Federteller unmittelbar angeformt sein.

In vorteilhafter Weiterbildung der Erfindung kann zwischen dem Aufbau des Kraftfahrzeuges und einem Radaufhängungselement ein Anschlagpuffer vorgesehen sein. Mittels der erfindungsgemäßen Verstelleinheit kann die Höhenposition des Aufbaus gegenüber dem Anschlagpuffer vorteilhaft in eine Tiefniveau-, eine Normalniveau- und eine Hochniveau-Stellung eingestellt werden. Bei der Tiefniveau-Stellung des Aufbaus kann somit der Anschlagpuffer mit dem Radaufhängungselement in Kontakt gebracht sein und als Zusatzfeder wirken. Somit ist in einfacher Weise die Federrate der Tragfeder in der Tiefniveau-Stellung des Aufbaus erhöht und damit dem in der Regel durch die Tieferlegung verkürztem Einfederweg der Räder des Kraftfahrzeuges Rechnung getragen. In der Normalniveau-Stellung und der Hochniveau-Stellung ist der Anschlagpuffer vom Radaufhängungselement mit unterschiedlichen Höhen beabstandet, wodurch der Einfederung der Räder entsprechend erhöht und die Federung des Fahrwerks weicher wird.

Bei einer Radaufhängung des Kraftfahrzeuges mit einem Federbein oder wenn innerhalb der Tragfeder und der Verstelleinheit ein Teleskopstoßdämpfer vorgesehen ist, dessen Kolbenstange über ein Dämpferlager und eine Tragplatte mit dem Aufbau verbunden ist, wird vorgeschlagen, dass der Anschlagpuffer innerhalb der Verstelleinheit angeordnet und mit der Tragplatte und dem Zylinderrohr des Stoßdämpfers entsprechend zusammenwirkt. Der Anschlagpuffer ist somit unverstellbar an der Tragplatte derart abgestützt, dass er in der besagten Tiefniveau-Stellung an dem Zylinderrohr des Stoßdämpfers zur Anlage kommt.

Dazu kann baulich einfach zwischen der Tragplatte des Dämpferlagers und dem Anschlagpuffer ein den Anschlagpuffer aufnehmendes und an die Tragplatte angeformtes Distanzrohr angeordnet sein.

Wie aus der Vorbeschreibung hervorgeht, ist die Tragfeder an der erfindungsgemäßen Verstelleinheit abgestützt, die wiederum fest am Fahrzeugaufbau montiert ist. Demgegenüber ist der Stoßdämpfer, unabhängig von der Tragfederlagerung, über seine Kolbenstange am aufbauseitigen Dämpferlager gelagert. Somit ist erfindungsgemäß eine getrennte Feder-/Dämpferlagerung bereitgestellt, bei der das Dämpferlager frei von Federkräften der Tragfeder und lediglich auf die Aufnahme von Dämpferkräften auszulegen ist.

Bei einer elektrohydraulischen Steuereinheit mit einer Druckmittelquelle, einer druckführenden Vorlaufleitung, einer mit einem Druckmittelsumpf verbundenen Rücklaufleitung und mit zumindest zwei elektrisch betätigten Steuerventilen, die die Hydraulikkammern der Stellmotoren alternierend oder gleichzeitig über Druckleitungen mit Druckmittel aus der Vorlaufleitung beaufschlagen oder mit der Rücklaufleitung verbinden, wird zur Schaffung einer einen günstigen Wirkungsgrad sicherstellenden und funktionell zuverlässigen Steuereinheit vorgeschlagen, dass an die Druckleitungen ein Druckspeicher angeschlossen ist und dass die zwei Steuerventile 4/3 Wegeventile sind, die neben der Druckbeaufschlagung und der Druckentlastung der beiden Hydraulikkammern eine Druckhaltefunktion aufweisen. Demzufolge muss die Druckmittelquelle - in der Regel eine elektrisch betriebene Hydraulikpumpe - nur bei Niveauverstellungen aktiviert sein, während im überwiegenden Betrieb die Niveaustellung über die Druckhaltefunktion und den Druckspeicher gesichert ist.

Dabei kann ferner vorteilhaft mittels eines die beiden Druckleitungen verbindenden oder trennenden 4/2 Wegeventiles der Druckspeicher auf beide oder nur auf die eine Druckleitung aufschaltbar sein, entsprechend der eingestellten Niveaustellung.

Zwei Ausführungsbeispiele der Erfindung sind im folgenden mit weiteren Einzelheiten näher erläutert. Die schematische Zeichnung zeigt in:
- **Fig. 1**: in einem Längsschnitt die Verstelleinheit einer Vorrichtung zur Höhenverstellung eines Aufbaus von Kraftfahrzeugen, mit einem aufbauseitigen Dämpferlager für einen Teleskop-Stoßdämpfer, einer Tragfeder und einem Anschlagpuffer;
- **Fig. 2**: einen um 90 Grad gedrehten Längsschnitt der Vorrichtung gemäß Fig. 1;
- **Fig. 3**: der Abschnitt X in vergrößerter Seitenansicht;
- **Fig. 4 bis 6**: die Verstelleinheit der Vorrichtung in den Niveaustellungen Tiefniveau, Normalniveau und Hochniveau; und
- **Fig. 7**: ein Blockschaltbild der elektrohydraulischen Steuereinheit der Vorrichtung nach den **Fig. 1 bis 6****.**

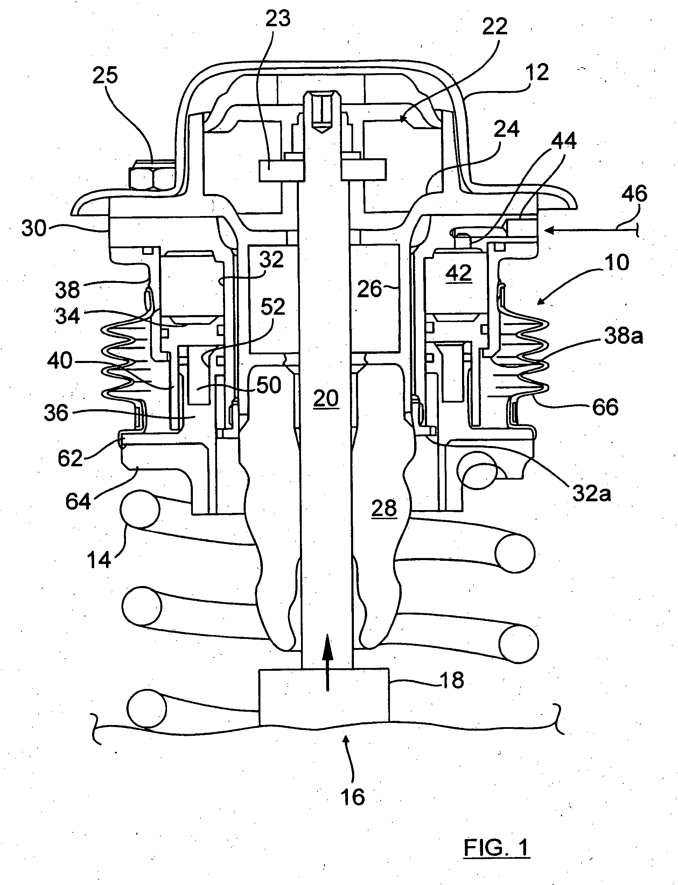

In den **Fig. 1 bis 3** ist in einem senkrechten Längsschnitt eine Vorrichtung zur Höhenverstellung des Aufbaus eines Kraftfahrzeuges ersichtlich, mit einer rotationssymmetrischen Verstelleinheit 10, die zwischen einen Federdom 12 aufbauseitig und eine Schraubendruckfeder bzw. Tragfeder 14 andererseits eingeschaltet ist.

Innerhalb der Tragfeder 14 ist ein nur teilweise dargestellter Teleskop-Stoßdämpfer 16 positioniert, der in bekannter Weise ein Zylinderrohr 18 und eine Kolbenstange 20 aufweist.

Die Kolbenstange 20 ist über ein nicht näher beschriebenes, an sich bekanntes Dämpferlager 22 mit einer Tragplatte 24 an dem Federdom 12 bzw. am Aufbau des Kraftfahrzeuges angelenkt. Das Dämpferlager 22 erstreckt sich als ein ringförmiger Elastomerblock um den Kolbenstangenkopf. Der Kolbenstangenkopf ist in üblicher Weise an einer, im Elastomerblock integrierten Metallscheibe 23 abgestützt und an dieser mittels einer Schraubverbindung befestigt.

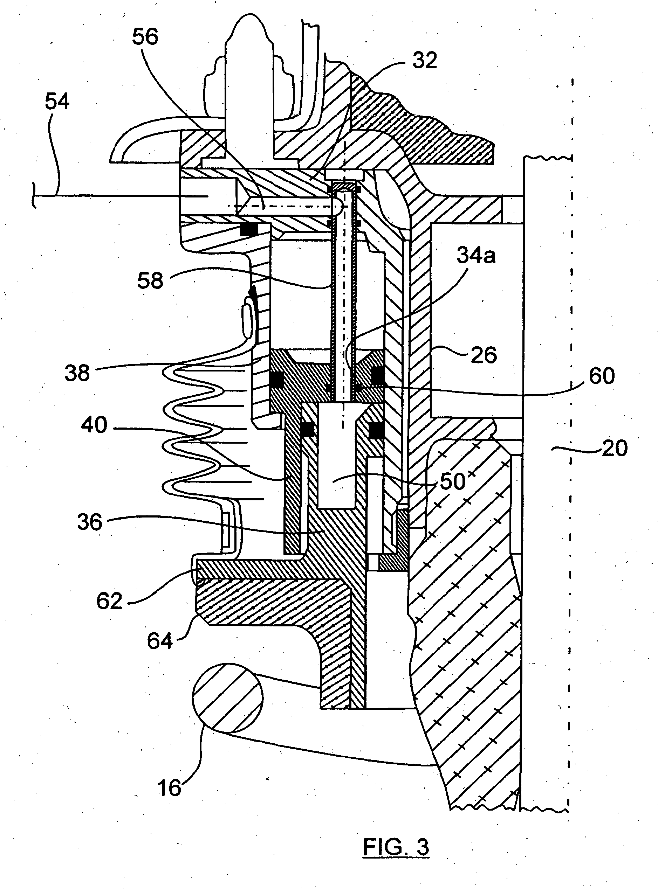

Wie aus der Detailansicht der **Fig. 3** deutlich hervorgeht, ist an die Tragplatte 24 ist ein Distanzrohr 26 angeformt, an dem um die Kolbenstange 20 herum ein gummielastischer Anschlagpuffer 28 abgestützt ist. Der Anschlagpuffer 28 wirkt in noch zu beschreibender Weise mit der benachbarten Stirnseite des Zylinderrohres 18 des Stoßdämpfers 16 als Zusatzfeder zur progressiven Erhöhung der Federrate der Tragfeder 14 zusammen.

Das Zylinderrohr 18 des Stoßdämpfers 16 ist entweder an einem Radführungselement (z. B. einem Lenker) der Radaufhängung des Kraftfahrzeuges angelenkt oder als radführendes Federbein mit einem Radführungselement (z. B. einem Radträger) fest verbunden.

Die Verstelleinheit 10 zur Höhenverstellung des Aufbaus 12 des Kraftfahrzeuges setzt sich im wesentlichen zusammen aus einer Basisplatte 30, einem an die Basisplatte 30 angeformten Innenzylinder 32, einem ersten Stellkolben 34 und einem zweiten Stellkolben 36, die beide auf dem Innenzylinder 32 axial verschiebbar geführt sind, ferner einem mit der Basisplatte 30 fest verbundenem Außenzylinder 38 und einem an den ersten Stellkolben 34 angeformten Außenzylinder 40. Die Basisplatte 30 ist zusammen mit der Tragplatte 24 mittels Schrauben 25 mit dem Federdom 12 bzw. dem Aufbau verschraubt.

Der an dem Außenzylinder 38 und dem Innenzylinder 32 geführte Stellkolben 34 begrenzt eine erste, ringförmige Hydraulikkammer 42 (vgl. **Fig. 1**), die über in die Basisplatte 30 eingearbeitete Kanäle 44 mit einer ersten Druckleitung 46 einer noch zu beschreibenden elektrohydraulischen Steuereinheit 48 verbindbar ist.

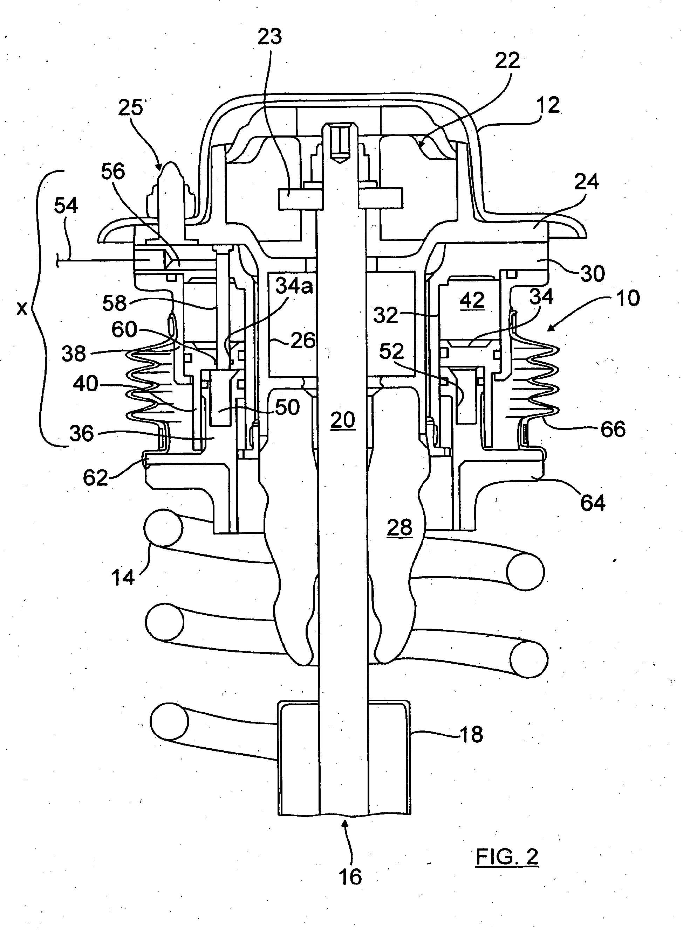

Der im Außendurchmesser kleinere, zweite Stellkolben 36 (vgl. **Fig. 2**) ist an dem Außenzylinder 40 und ebenfalls dem Innenzylinder 32 axial verschiebbar geführt und begrenzt in Verbindung mit dem ersten Stellkolben 34 eine zweite, ringförmige Hydraulikkammer 50, die überwiegend durch eine ringförmige Ausnehmung 52 in den zweiten Stellkolben 36 eingearbeitet ist.

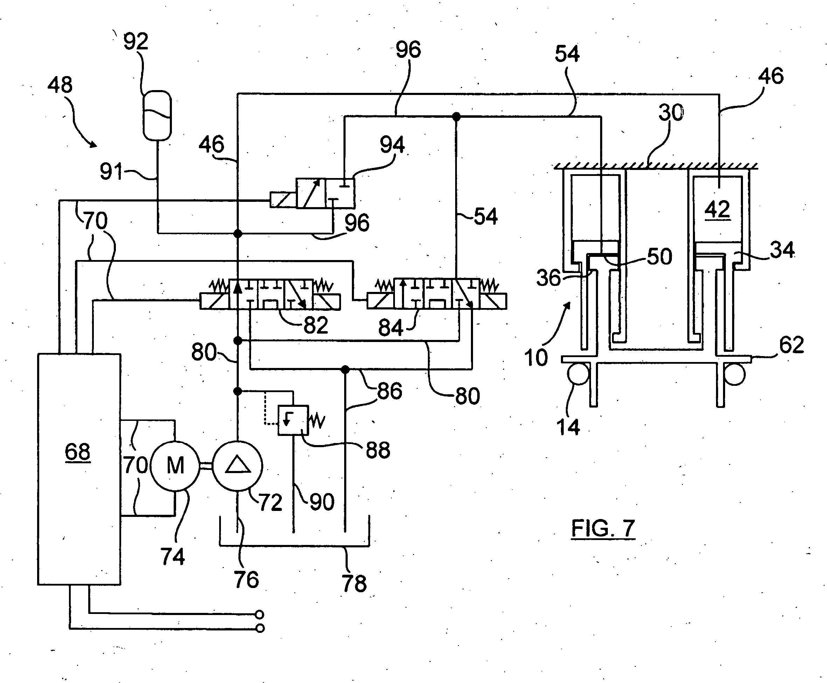

Wie deutlich aus der vergrößerten Seitenansicht gemäß der **Fig. 3** hervorgeht, erfolgt die hydraulische Verbindung zu einer ebenfalls an die Basisplatte 30 angeschlossenen, zweiten Druckleitung 54 der Steuereinheit 48 (**Fig. 7**) über in die Basisplatte 30 eingearbeitete Kanäle 56 und ein mit den Kanälen 56 kommunizierendes Druckrohr 58. Das Druckrohr 58 ist an der Basisplatte 30 befestigt (z. B. eingeschraubt), durchquert wie ersichtlich die erste Hydraulikkammer 42 und ragt durch eine als Schiebeführung ausgeführte Bohrung 34a des ersten Stellkolbens 34 hindurch in die zweite Hydraulikkammer 50 hinein. Das starre Druckrohr 58 ist dabei in der Bohrung 34a mittels eines Dichtringes 60 abgedichtet. Die Ausnehmung 52 im Stellkolben 36 ist dabei so tief ausgeführt, dass das Druckrohr 58 bei eingefahrenem Stellkolben 34 und 36 frei in die Ausnehmung 52 eintauchen kann.

An den Stellkolben 36 ist an seiner Unterseite unmittelbar der Federteller 62 angeformt, an dem unter Zwischenschaltung einer gummielastischen Federunterlage 64 die Tragfeder 14 abgestützt ist. Der die Tragfeder 14 andererseits am Zylinderrohr 18 des Stoßdämpfers 16 abstützende Federteller ist nicht dargestellt.

Die Federkraft der auf dem Federteller 62 abgestützten Tragfeder 14 wird daher über die Stellkolben 34, 36 und die Basisplatte 30 der Verstelleinheit 10 vorbei an dem Dämpferlager 22 direkt in den Fahrzeugaufbau geleitet. Das Dämpferlager 22 ist daher frei von Federkräften der Tragfeder 14, so dass es vorteilhaft nur auf die Aufnahme von Dämpferkräften auszulegen ist, die über die Kolbenstange 20 des Stoßdämpfers 16 eingeleitet werden.

Es versteht sich, dass die Hydraulikkammern 42, 50 flüssigkeitsdicht ausgeführt sind bzw. dass wie gezeichnet entsprechende Ringdichtungen (ohne Bezugszeichen) an den Stellkolben 34, 36 und an der Basisplatte 30 vorgesehen sind. Ferner sind an dem Außenzylinder 38 und an dem Innenzylinder 32 ringförmige Anschläge 38a, 32a (**Fig. 1**) vorgesehen, an denen die Stellkolben 34, 36 in ihrer ausgefahrenen Position anschlagen können und somit Niveaustellungen definieren. In den eingefahrenen Positionen legt sich der Stellkolben 34 an der Basisplatte 30 und der Stellkolben 36 an dem Stellkolben 34 wie ersichtlich an. Des weiteren ist an dem Außenzylinder 38 und an dem Federteller 62 eine Schutzmanschette 66 befestigt, die einem Eindringen von Schmutz oder Feuchtigkeit in die Verstelleinheit 10 entgegenwirkt.

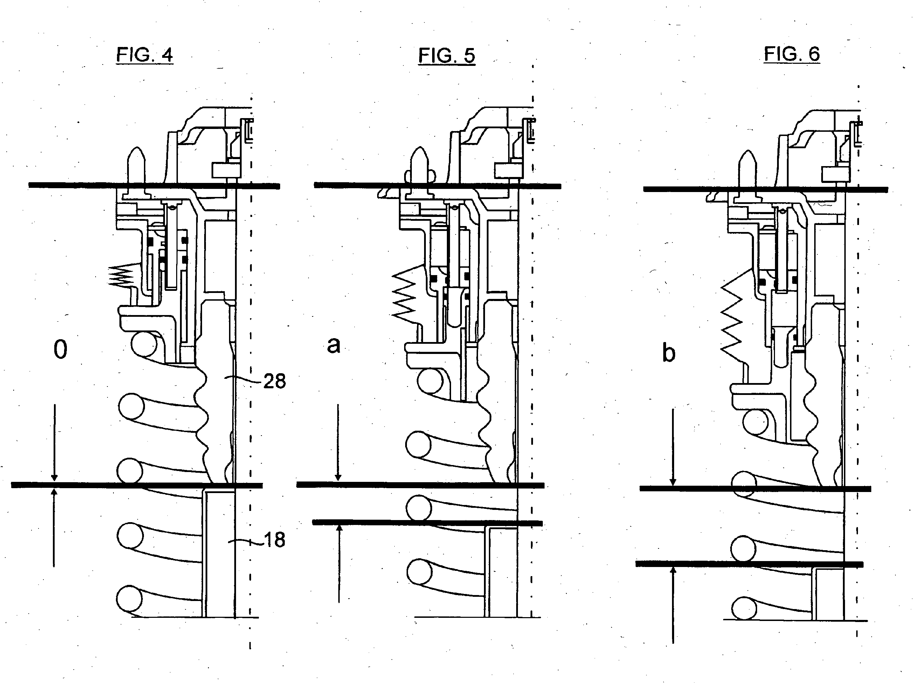

Die Verstelleinheit 10 ermöglicht eine Höhenverstellung des Aufbaus bzw. Federdoms 12 in die Niveaustellungen Hochniveau (beide Stellkolben 34, 36 ausgefahren), Normalniveau (Stellkolben 34 ausgefahren, Stellkolben 36 eingefahren) und Tiefniveau (beide Stellkolben 34, 36 drucklos bzw. eingefahren). Die Niveaustellungen Tiefniveau, Normalniveau und Hochniveau der Verstelleinheit 10 sind in den **Fig. 4 bis 6** jeweils einzeln gezeigt. Demzufolge ist der Anschlagpuffer 28 gemäß der **Fig. 4** höhenmäßig derart ausgelegt, dass er bei der Stellung Tiefniveau an der Stirnseite des Zylinderrohres 18 des Stoßdämpfers 16 mehr oder weniger anschlägt und somit als einsetzende Zusatzfeder die Federrate der Tragfeder 14 progressiv erhöht. Ein Abstandsmaß zwischen dem Anschlagpuffer 28 und dem Zylinderrohr 18 liegt hier bei 0.

In der **Fig. 5 und 6** ist der Aufbau jeweils in der Niveaustellung Normalniveau und Hochniveau gezeigt, in der das Abstandsmaß zwischen dem Zylinderrohr 18 und dem Anschlagpuffer 28 bei a bzw. b liegt.

Die Druckversorgung der Hydraulikkammern 42, 50 der Verstelleinheit 10 erfolgt mittels der in der **Fig. 7** dargestellten, elektrohydraulischen Steuereinheit 48.

Die Steuereinheit 48 weist ein elektronisches Steuergerät 68 auf, das u. a. über elektrische Leitungen (allgemein mit 70 bezeichnet) einen eine Hydraulikpumpe 72 bei Bedarf antreibenden Elektromotor 74 und die noch zu beschreibenden Steuerventile der Steuereinheit 48 je nach einzustellender Niveaustellung ansteuert.

Die Hydraulikpumpe 72 saugt über eine Leitung 76 Hydraulikflüssigkeit aus einem Vorratsbehälter bzw. Hydrauliksumpf 78 an und fördert diese über Vorlaufleitungen 80 zu zwei 4/3 Wegeventilen 82, 84. Ferner zweigen von den Wegeventilen 82, 84 Rücklaufleitungen 86 ab, die in den Hydrauliksumpf 78 münden. In die Vorlaufleitung 80 ist zudem ein Überdruckventil 88 mit einer weiteren Rücklaufleitung 90 eingeschaltet.

Von den Wegeventilen 82, 84 gehen des weiteren die Druckleitungen 46, 54 ab, die wie vorbeschrieben mit den Hydraulikkammern 42, 50 der Verstelleinheit 10 kommunizieren.

Ferner ist an die Druckleitung 46 über eine Leitung 91 ein Druckspeicher 92 (Akkumulator) mit einem definierten Speichervolumen angeschlossen. Der Druckspeicher 92 kann über ein 4/2 Wegeventil 94 und eine Verbindungsleitung 96 auch auf die Druckleitung 54 geschaltet werden. Der anliegende Speicherdruck des Druckspeichers 92 wird in nicht dargestellter Weise über das elektronische Steuergerät 68 überwacht.

Die Wegeventile 82, 84 können von dem elektronischen Steuergerät 68 in die drei Stellungen Druckbeaufschlagung, Druckhaltung und Druckentlastung gesteuert werden.

Bei Druckbeaufschlagung der ersten Hydraulikkammer 42 oder beider Hydraulikkammern 42, 50 werden die Vorlaufleitungen 80 bei aktivierter Hydraulikpumpe 72 mit der Druckleitung 46 oder mit beiden Druckleitungen 46, 54 verbunden. Bei Beaufschlagung nur der Druckleitung 46 ist das Wegeventil 94 geschlossen bzw. die Verbindungsleitung 96 unterbrochen, bei Druckbeaufschlagung beider Druckleitungen 46, 54 ist das Wegeventil 94 geöffnet.

Nach Befüllung der Hydraulikkammer 42 über die Druckleitung 46 oder Befüllung beider Hydraulikkammern 42, 50 über die Druckleitungen 46, 54 schaltet das Steuergerät 68 die Wegeventile 82, 84 auf Druckhaltung um, wobei die Druckleitungen 46 oder 46, 54 von den Vorlaufleitungen 80 getrennt werden.

Soll ausgehend von der Hochniveaustellung (beide Stellkolben 34, 36 ausgefahren) in die Normalniveaustellung (Hydraulikkammer 50 drucklos) geschaltet werden, so steuert das Steuergerät 68 das Wegeventil 84 derart an, dass dieses die Druckleitung 54 mit der Rücklaufleitung 86 verbindet. Gleichzeitig oder vorher wird das Wegeventil 94 geschlossen, wodurch die Druckleitung 46 weiterhin druckbeaufschlagt bleibt und die Druckleitung 54 drucklos wird.

In der Tiefniveaustellung der Verstelleinheit 10 wird schließlich über das Wegeventil 82 auch die Druckleitung 46 mit der Rücklaufleitung 86 verbunden, so dass auch der erste Stellkolben 34 unter Entleerung der Hydraulikkammer 42 einfährt.

## Patentansprüche

1. Vorrichtung zur Höhenverstellung des Aufbaus (12) von Kraftfahrzeugen relativ zur Radaufhängung, mit einer hydraulisch betätigten Verstelleinheit (10), die zwischen den Aufbau (12) und den Federteller (62) einer Tragfeder (14) der Radaufhängung geschaltet ist und die zumindest zwei in Zylindern (38, 40) verschiebbar geführte, teleskopartig hintereinander angeordnete Stellkolben (34, 36) aufweist, die getrennt oder gemeinsam über eine elektrohydraulische Steuereinheit mit Druck beaufschlagbar sind und den Aufbau (12) höhenverstellen, wobei die Druckversorgung der beiden Hydraulikkammern (42, 50) der getrennt verstellbaren Stellkolben (34, 36) von einer aufbauseitigen, die erste Hydraulikkammer (42) begrenzenden Basisplatte (30) aus erfolgt, **dadurch gekennzeichnet, dass** die beiden Stellkolben (34, 36) ringförmig ausgeführt sind und die Basisplatte (30) mit einem Innenzylinder (32) ausgebildet ist, auf dem die beiden Stellkolben (34, 36) gemeinsam verschiebbar geführt sind.

2. Vorrichtung nach Anspruch 1, **dadurch gekennzeichnet, dass** an der Basisplatte (30) ein rohrförmiges Element (58) angeordnet ist, das die erste Hydraulikkammer (42) durchquert und durch den ersten Stellkolben (34) hindurch in die zweite Hydraulikkammer (50) mündet.

3. Vorrichtung nach einem der Ansprüche 1 oder 2, **dadurch gekennzeichnet, dass** das rohrförmige Element (58) an der Basisplatte (30) befestigt und in dem ersten Stellkolben (34) geführt und abgedichtet ist.

4. Vorrichtung nach einem der Ansprüche 1 bis 3, **dadurch gekennzeichnet, dass** das rohrförmige Element (58) bei eingefahrenem ersten und zweiten Stellkolben (34, 36) in eine im zweiten Stellkolben (36) vorgesehene, zur zweiten Hydraulikkammer (50) offene Ausnehmung (52) einragt.

5. Vorrichtung nach einem der Ansprüche 1 bis 4, **dadurch gekennzeichnet, dass** der erste Stellkolben (34) ferner in einem an der Basisplatte (30) befestigten Außenzylinder (38) geführt ist und dass an den ersten Stellkolben (34) ein zweiter, im Durchmesser kleinerer Außenzylinder (40) angeformt ist, in dem der zweite Stellkolben (36) verschiebbar geführt ist.

6. Vorrichtung nach einem der Ansprüche 1 bis 5, **dadurch gekennzeichnet, dass** an den zweiten Stellkolben (36) der Federteller (62) unmittelbar angeformt ist.

7. Vorrichtung nach einem der vorhergehenden Ansprüche, **dadurch gekennzeichnet, dass** zwischen dem Aufbau (12) des Kraftfahrzeuges und einem Radaufhängungselement (16) ein Anschlagpuffer (28) vorgesehen ist, der vorzugsweise bei einer Stellung des Aufbaus (12) entsprechend dem Tiefniveau mit dem Radaufhängungselement (16) in Kontakt gerät und als Zusatzfeder wirkt.

8. Vorrichtung nach Anspruch 7, **dadurch gekennzeichnet, dass** innerhalb der Tragfeder (14) und der Verstelleinheit (10) ein Teleskop-Stoßdämpfer (16) vorgesehen ist, dessen Kolbenstange (20) über ein Dämpferlager (22) und eine Tragplatte (24) mit dem Aufbau (12) verbunden ist und dass der Anschlagpuffer (28) innerhalb der Verstelleinheit (10) angeordnet und mit der Tragplatte (24) und dem Zylinderrohr (18) des Stoßdämpfers (16) zusammenwirkt.

9. Vorrichtung nach Anspruch 8, **dadurch gekennzeichnet, dass** zwischen der Tragplatte (24) des Dämpferlagers (22) und dem Anschlagpuffer (28) ein den Anschlagpuffer (28) aufnehmendes und an die Tragplatte (24) angeformtes Distanzrohr (26) angeordnet ist.

10. Vorrichtung nach einem der vorhergehenden Ansprüche, mit einer elektrohydraulischen Steuereinheit (48) mit einer Druckmittelquelle (72), einer druckführenden Vorlaufleitung (80), einer mit einem Druckmittelsumpf (78) verbundenen Rücklaufleitung (86) und mit zumindest zwei elektrisch betätigten Steuerventilen (82, 84), die die Hydraulikkammern (42, 50) der Stellkolben (34, 36) alternierend oder gleichzeitig über Druckleitungen (46, 54) mit Druckmittel aus der Vorlaufleitung (80) beaufschlagen oder mit der Rücklaufleitung (86) verbinden, **dadurch gekennzeichnet, dass** an die Druckleitungen (46, 54) ein Druckspeicher (92) angeschlossen ist und dass die zwei Steuerventile (82, 84) 4/3 Wegeventile sind, die neben der Druckbeaufschlagung und der Druckentlastung der Hydraulikkammern (42, 50) eine Druckhaltefunktion aufweisen.

11. Vorrichtung nach Anspruch 10, **dadurch gekennzeichnet, dass** mittels eines die beiden Druckleitungen (46, 54) verbindenden oder trennenden 4/2 Wegeventiles (94) der Druckspeicher (92) auf beide oder nur auf die eine Druckleitung (46, 54) aufschaltbar ist.

12. Vorrichtung nach einem der Ansprüche 1 bis 11, **dadurch gekennzeichnet, dass** die Stellkolben (34, 36) in die Stellungen Tiefniveau, Normalniveau oder Hochniveau höhenverstellbar sind.

## Claims

1. Device for vertically adjusting the body (12) of motor vehicles relative to the wheel suspension, having a hydraulically actuated adjustment unit (10) which is mounted between the body (12) and the spring plate (62) of a bearing spring (14) of the wheel suspension and which comprises at least two setting pistons (34, 36) movably guided within cylinders (38, 40) and arranged telescopically behind one another, which can be separately or jointly subjected to pressure by means of an electrohydraulic control unit and vertically adjust the body (12), the supply of pressure to the two hydraulic chambers (42, 50) of the separately movable setting pistons (34, 36) being effected from a base plate (30) which is mounted on the body side and delimits the first hydraulic chamber (42), **characterised in that** the two setting pistons (34, 36) are of annular configuration and the base plate (30) is embodied with an inner cylinder (32) on which the two setting pistons (34, 36) are guided to be jointly movable.

2. Device according to claim 1, **characterised in that** on the base plate (30) is mounted a tubular element (58) which traverses the first hydraulic chamber (42) and opens into the second hydraulic chamber (50) through the first setting piston (34).

3. Device according to one of claims 1 or 2, **characterised in that** the tubular element (58) is attached to the base plate (30) and is guided and sealed within the first setting piston (34).

4. Device according to one of claims 1 to 3, **characterised in that** when the first and second setting pistons (34, 36) are retracted the tubular element (58) projects into a recess (52) which is provided in the second setting piston (36) and is open towards the second hydraulic chamber (50)

5. Device according to one of claims 1 to 4, **characterised in that** the first setting piston (34) is also guided in an outer cylinder (38) attached to the base plate (30) and **in that** a second outer cylinder (40) of smaller diameter in which the second setting piston (36) is movably guided is formed onto the first setting piston (34).

6. Device according to one of claims 1 to 5, **characterised in that** the spring plate (62) is formed directly onto the second setting piston (36).

7. Device according to one of the preceding claims, **characterised in that** between the body (12) of the motor vehicle and a wheel suspension element (16) a buffer stop (28) is provided which preferably comes into contact with the wheel suspension element (16) and acts as a supplementary spring when the body (12) is in a position corresponding to the bottom level.

8. Device according to claim 7, **characterised in that** inside the bearing spring (14) and the adjustment unit (10) is provided a telescopic shock absorber (16), the piston rod (20) of which is connected to the body (12) by means of a shock absorber bearing (22) and a carrier plate (24), and **in that** the buffer stop (28) is arranged within the adjustment unit (10) and cooperates with the carrier plate (24) and the cylinder tube (18) of the shock absorber (16).

9. Device according to claim 8, **characterised in that** a spacer tube (26) which accommodates the buffer stop (28) and is formed on the carrier plate (24) is arranged between the bearing plate (24) of the shock absorber bearing (22) and the buffer stop (28).

10. Device according to one of the preceding claims, having an electrohydraulic control unit (48) with a pressure medium source (72), a pressure-supplying feed line (80), a return line (86) connected to a pressure medium sump (78) and having at least two electrically operated control valves (82, 84) which alternately or simultaneously apply pressure medium from the feed line (80) to the hydraulic chambers (42, 50) of the setting pistons (34, 36) through pressure lines (46, 54) or connect said hydraulic chambers (42, 50) to the return line (86), **characterised in that** a pressure reservoir (92) is connected to the pressure lines (46, 54) and **in that** the two control valves (82, 84) are 4/3-way valves which have a pressure maintenance function, in addition to applying pressure to and relieving pressure from the hydraulic chambers (42, 50).

11. Device according to claim 10, **characterised in that** by means of a 4/2-way valve (94) that connects or separates the two pressure lines (46, 54) the pressure reservoir (92) can be switched to both pressure lines (46, 54) or to only one pressure line.

12. Device according to one of claims 1 to 11, **characterised in that** the setting pistons (34, 36) can be adjusted vertically into the low, normal or high level positions.

## Revendications

1. Dispositif pour le réglage en hauteur de la carrosserie (12) de véhicules automobiles par rapport à la suspension de roue, avec une unité de réglage (10) actionnée par des moyens hydrauliques, laquelle est placée entre la carrosserie (12) et la coupelle de ressort (62) d'un ressort de suspension (14) de la suspension de roue et qui comporte au moins deux pistons de réglage (34, 36) qui sont guidés en translation dans des cylindres (38, 40), qui sont agencés l'un derrière l'autre de manière télescopique, qui peuvent être alimentés en pression séparément ou ensemble par l'intermédiaire d'une unité de commande électrohydraulique et qui règlent en hauteur la carrosserie (12), l'alimentation en pression des deux chambres hydrauliques (42, 50) des pistons de réglage (34, 36) réglables séparément s'effectuant à partir d'une plaque de base (30) qui est placée du côté de la carrosserie et qui délimite la première chambre hydraulique (42), **caractérisé en ce que** les deux pistons de réglage (34, 36) sont réalisés en forme d'anneau et **en ce que** la plaque de base (30) est conçue avec un cylindre intérieur (32) sur lequel les deux pistons de réglage (34, 36) sont guidés ensemble en translation.

2. Dispositif selon la revendication 1, **caractérisé en ce que**, sur la plaque de base (30), est agencé un élément tubulaire (58) qui traverse la première chambre hydraulique (42) et qui débouche, à travers le premier piston de réglage (34), dans la deuxième chambre hydraulique (50).

3. Dispositif selon l'une des revendications 1 ou 2, **caractérisé en ce que** l'élément tubulaire (58) est fixé à la plaque de base (30) et est guidé de façon étanche dans le premier piston de réglage (34).

4. Dispositif selon l'une des revendications 1 à 3, **caractérisé en ce que**, lorsque le premier et le deuxième piston de réglage (34, 36) sont rentrés, l'élément tubulaire (58) pénètre dans un évidement (52) prévu dans le deuxième piston de réglage (36) et ouvert en direction de la deuxième chambre hydraulique (50).

5. Dispositif selon l'une des revendications 1 à 4, **caractérisé en ce que** le premier piston de réglage (34) est guidé en plus dans un cylindre extérieur (38) fixé sur la plaque de base (30) et **en ce qu'**un deuxième cylindre extérieur (40), qui est inférieur en diamètre et dans lequel le deuxième piston de réglage (36) est guidé en translation, est formé sur le premier piston de réglage (34).

6. Dispositif selon l'une des revendications 1 à 5, **caractérisé en ce que** la coupelle de ressort (62) est formée directement sur le deuxième piston de réglage (36).

7. Dispositif selon l'une des revendications précédentes, **caractérisé en ce qu'**il est prévu entre la carrosserie (12) du véhicule automobile et un élément de suspension de roue (16) un tampon de butée (28) qui, de préférence pour une position de la carrosserie (12) correspondant au niveau bas, vient en contact avec l'élément de suspension de roue (16) et agit alors comme ressort supplémentaire.

8. Dispositif selon la revendication 7, **caractérisé en ce que**, à l'intérieur du ressort de suspension (14) et de l'unité de réglage (10), il est prévu un amortisseur télescopique (16) dont la tige de piston (20) est reliée à la carrosserie (12) par l'intermédiaire d'un palier d'amortisseur (22) et d'une plaque d'appui (24) et **en ce que** le tampon de butée (28) est agencé à l'intérieur de l'unité de réglage (10) et coopère avec la plaque d'appui (24) et avec le tube cylindrique (18) de l'amortisseur (16).

9. Dispositif selon la revendication 8, **caractérisé en ce qu'**une douille d'écartement (26) logeant le tampon de butée (28) et formée sur la plaque d'appui (24) est agencée entre la plaque d'appui (24) du palier d'amortisseur (22) et le tampon de butée (28).

10. Dispositif selon l'une des revendications précédentes, comportant une unité de commande électrohydraulique (48) avec une source de fluide de pression (72), avec une conduite d'aller (80) conduisant la pression, avec une conduite de retour (86) reliée à un collecteur de fluide de pression (78) et avec au moins deux vannes de commande (82, 84) actionnées par électricité qui alimentent en fluide de pression en provenance de la conduite d'aller (80), en alternance ou simultanément, par l'intermédiaire de conduites de pression (46, 54), les chambres hydrauliques (42, 50) des pistons de réglage (34, 36) ou qui relient celles-ci à la conduite de retour (86), **caractérisé en ce qu'**un accumulateur de pression (92) est raccordé aux conduites de pression (46, 54) et **en ce que** les deux vannes de commande (82, 84) sont des vannes à 4/3 voies qui ont une fonction de maintien de la pression en plus de l'alimentation en pression et de la détente des chambres hydrauliques (42, 50).

11. Dispositif selon la revendication 10, **caractérisé en ce que** l'accumulateur de pression (92) peut être branché sur les deux conduites de pression (46, 54) ou seulement sur l'une des deux au moyen d'une vanne à 4/2 voies (94) reliant ou séparant les deux conduites de pression (46, 54).

12. Dispositif selon l'une des revendications 1 à 11, **caractérisé en ce que** les pistons de réglage (34, 36) sont réglables en hauteur dans les positions niveau bas, niveau normal ou niveau haut.
